# EUROPÄISCHE PATENTSCHRIFT

(11) **EP 3 345 697 B1**
(45) Veröffentlichungstag und Bekanntmachung des Hinweises auf die Patenterteilung: **01.07.2020**
(21) Anmeldenummer: 17197766.3
(22) Anmeldetag: 23.10.2017
(51) Int. Cl.: B22F 3/105, B23K 15/00, B23K 26/08, B33Y 10/00, B33Y 30/00, B33Y 40/00, B23K 26/342, B23K 26/70, B23K 26/60, B29C 64/153, B29C 64/20, B29C 64/282, B29C 64/277, B29C 64/295, B29C 64/264, B22F 3/24

(54) **VORRICHTUNG ZUR GENERATIVEN HERSTELLUNG VON BAUTEILEN**
DEVICE FOR THE GENERATIVE PRODUCTION OF COMPONENTS
DISPOSITIF DESTINÉS À LA FABRICATION ADDITIVE DE COMPOSANTS

(30) Priorität: 20.12.2016 DE 102016225616
(43) Veröffentlichungstag der Anmeldung: 11.07.2018
(73) Patentinhaber: Robert Bosch GmbH, 70442 Stuttgart (DE)
(72) Erfinder: Loeber, Lukas, 71638 Ludwigsburg (DE)

(56) Entgegenhaltungen:
- EP-A1- 2 839 948
- WO-A1-96/35573
- DE-A1-102013 205 029
- DE-A1-102015 205 314
- DE-B3-102006 053 121
- US-A1- 2014 263 209

## Beschreibung

### Stand der Technik

Die Erfindung betrifft eine Vorrichtung zur generativen Herstellung von Bauteilen nach dem Oberbegriff des Anspruchs 1.

Aus der US 2014/263209 A1 ist eine Vorrichtung nach dem Oberbegriff des unabhängigen Anspruchs bekannt.

Aus der EP 2 839 948 A1 sind eine Vorrichtung und ein Verfahren bekannt. Dabei wird das Material des Pulverbetts mittels zweier, separater bzw. voneinander unabhängiger Heizeinrichtungen erwärmt. Aus der genannten Schrift ist jedoch nicht entnehmbar, in welchem Verhältnis die durch die beiden Heizeinrichtungen erzielten Temperaturen des Pulverbetts stehen.

Aus der DE 10 2013 2005 029 A1 ist darüber hinaus eine Vorrichtung bzw. ein Verfahren bekannt, bei dem einem Bearbeitungsstrahl mehrere Nachbehandlungslaserstrahlen folgen, die der thermischen Nachbehandlung des von dem Bearbeitungsstrahl aufgeschmolzenen Pulverbetts dienen. Auch ist dort eine Vorrichtung gezeigt, bei der dem Bearbeitungsstrahl eine einzige Heizeinrichtung in Form eines Bearbeitungsstrahls vorgeschaltet ist.

Die WO 2015/155745 A1 zeigt eine Vorrichtung mit einer Vielzahl von oberhalb eines Pulverbetts angeordneter, gleichartiger und in Form eines festen Rasters zueinander angeordneter Heizelemente, die dort beispielhaft als Induktionsspulen ausgebildet sind. Die Heizeinrichtungen sind zusammen mit einer Pulverdosiereinheit in der Ebene oberhalb des Pulverbetts beweglich angeordnet, so dass nach dem Dosieren einer jeweils obersten Pulverschicht und Erwärmen derselben ein energiereicher Strahl, insbesondere ein Laserstrahl, die jeweils oberste Pulverschicht bereichsweise aufschmelzen kann, um ein Bauteil herzustellen. In der genannten Schrift ist es darüber hinaus offenbart, dass die Heizeinrichtungen dazu dienen können, unterschiedliche Bereiche des Pulverbetts unterschiedlich stark erwärmen zu können.

Weiterhin ist es aus der DE 10 2014 203 711 A1 bekannt, ein Pulverbett im unmittelbaren Auftreffbereich eines energiereichen Strahls durch Zusammenwirken zweier Induktionsspulen zu erwärmen. Die Einwirkbereiche der beiden Induktionsspulen, die jeweils entlang zweier senkrecht zueinander angeordneter Richtungen in einer Ebene beweglich angeordnet sind, sind im Wesentlichen länglich ausgebildet, so dass im Auftreffbereich des Laserstrahls im Schnittbereich der beiden länglichen Einwirkbereiche sich die Heizwirkungen der beiden Heizeinrichtungen addieren.

### Offenbarung der Erfindung

Die Vorrichtung zur generativen Herstellung von Bauteilen mit den Merkmalen des unabhängigen Anspruchs hat den Vorteil, dass mit relativ geringem vorrichtungstechnischen Aufwand eine gezielte, lokale Erwärmung des Pulverbetts durch eine zweite Heizeinrichtung in dem Bereich des Pulverbetts erfolgt, der unmittelbar anschließend in den Auftreffbereich des energiereichen Strahls gelangt. Es wird somit mit anderen Worten gesagt ein zweistufiges Erwärmen des Pulverbetts ermöglicht, bei dem lediglich der für den Auftreffbereich des Laserstrahl relevante Bereich des Pulverbetts lokal zusätzlich erwärmt wird, derart, dass der energiereiche Strahl das Material des Pulverbetts im Bereich der obersten Schicht lediglich noch um einen geringen Temperaturbetrag erwärmen muss. Dies hat den Vorteil, dass bei relativ geringem Energieaufwand für die Heizeinrichtungen sehr kurze Prozeßzeiten bzw. sehr hohe Prozessleistungen ermöglicht werden, was entsprechend hohe Aufschmelzraten zur Folge hat und somit eine besonders schnelle bzw. wirtschaftliche Fertigung der Bauteile ermöglicht.

Vorteilhafte Weiterbildungen der erfindungsgemäßen Vorrichtung zur generativen Herstellung von Bauteilen sind in Unteransprüchen aufgeführt.

Um nach dem Erstarren der jeweils obersten Pulverschicht bzw. nach dem Ausbilden des Bauteils infolge unterschiedlich hoher Abkühlgeschwindigkeiten erzeugte Bereiche mit Thermospannungen im Bauteil zu vermeiden, ist es bevorzugt vorgesehen, dass die Vorrichtung zusätzlich wenigstens eine dritte Heizeinrichtung mit wenigstens einem Heizelement für die erstarrte Pulverschmelze aufweist. Diese dritte Heizeinrichtung ermöglicht es somit, insbesondere die Abkühlgeschwindigkeit des erstarrten Materials, auch im Übergangsbereich zu dem nicht aufgeschmolzenen Material des Pulverbetts, zu beeinflussen.

Grundsätzlich stehen hinsichtlich der Ausbildung der Heizelemente der Heizeinrichtungen unterschiedliche Möglichkeiten zur Verfügung, wobei es grundsätzlich auch denkbar ist, dass die Heizelemente der unterschiedlichen Heizeinrichtungen unterschiedlich ausgestaltet sein können. Mit Blick auf einen möglichst einfachen Aufbau bzw. eine relativ einfache konstruktive Ausgestaltung der Heizeinrichtungen ist es vorgesehen, dass wenigstens ein Heizelement der Heizeinrichtungen, vorzugsweise alle Heizelemente der Heizeinrichtungen, als Infrarotstrahlungsquelle ausgebildet sind.

In Weiterbildung einer derartigen Ausgestaltung der Heizelemente bzw. Heizeinrichtungen ist es zur Erzeugung einer gleichmäßigen Bestrahlung bzw. Wärmeverteilung in dem Pulverbett bevorzugt vorgesehen, dass die Infrarotstrahlungsquellen jeweils mit einer Spiegeleinrichtung zusammenwirken, die die Wärmestrahlung in Richtung des Pulverbetts reflektiert. Mit anderen Worten gesagt bedeutet dies, dass die Infrarotstrahlungsquelle bzw. deren Abstrahlrichtung (wobei das Heizelement oberhalb des Pulverbetts angeordnet ist) in die von dem Pulverbett abgewandte Richtung ausgerichtet ist, und durch die Spiegeleinrichtung eine Einwirkung der Wärmestrahlung der Infrarotstrahlungsquelle auf das Pulverbett erzielt wird.

Zur Reduzierung der thermischen Belastung der die Heizeinrichtung aufnehmenden Bauteile bzw. der Spiegeleinrichtung ist es weiterhin von Vorteil, wenn die Spiegeleinrichtung mit einer Kühleinrichtung zusammenwirkt.

Zur Anpassung an unterschiedlich große Einwirkbereiche bzw. Abstände der Heizelemente zu dem Pulverbett ist es darüber hinaus von Vorteil, wenn die Spiegeleinrichtungen unterschiedlich stark gekrümmt ausgebildet sind und im Querschnitt elliptisch oder parabolisch geformt sind.

Wenn die Heizeinrichtungen bzw. Heizelemente oberhalb des Pulverbetts angeordnet sind, ist eine besonders gute Zugänglichkeit, auch im Wartungsfall, zu den Heizeinrichtungen möglich.

Die erfindungsgemäße Ausgestaltung bzw. Anordnung der Heizeinrichtungen sieht vor, dass die wenigstens eine zweite Heizeinrichtung in Überdeckung mit der wenigstens einen ersten Heizeinrichtung angeordnet ist, so dass die erste Heizeinrichtung einen größeren Abstand zum Pulverbett aufweist als die zweite Heizeinrichtung.

Um insbesondere im letztgenannten Fall, bei der die erste Heizeinrichtung, die oberhalb der zweiten Heizeinrichtung angeordnet ist, und dadurch auch auf die zweite Heizeinrichtung einwirkt, eine thermische Überlastung der zweiten Heizeinrichtung durch die erste Heizeinrichtung zu vermeiden, ist es vorgesehen, dass die in Überdeckung mit der zweiten Heizeinrichtung angeordnete erste Heizeinrichtung zumindest teilweise abschaltbar ausgebildet ist. Hierzu kann es vorgesehen sein, mittels einer Einrichtung die Position der zweiten Heizeinrichtung zu erfassen und in Abhängigkeit davon die Heizelemente der ersten Heizeinrichtung zu deaktivieren.

Bei einer bevorzugten Ausgestaltung des erfindungsgemäßen Verfahrens ist es vorgesehen, dass das Pulvermaterial durch die zweite Heizeinrichtung auf 90% bis 98%, vorzugsweise auf 95% der Schmelztemperatur des Pulvermaterials erwärmt wird. Dadurch ist bis zum Aufschmelzen des Pulvermaterials nur ein relativ geringer Temperatursprung bzw. eine geringe Temperaturerhöhung durch den energiereichen Strahl, der insbesondere in Form eines Laserstrahls ausgebildet ist, erforderlich. Dadurch lässt sich eine relativ hohe Prozessleistung bzw. Aufschmelzrate pro Zeiteinheit während der Einwirkung des energiereichen Strahls erzielen.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen vereinfachten Längsschnitt durch eine erfindungsgemäße Vorrichtung zur generativen Herstellung von Bauteilen, wobei die Vorrichtung in Rundläuferbauart ausgebildet ist,
- Fig. 2: den Bereich einer zweiten Heizeinrichtung der Vorrichtung gemäß Fig. 1 in einer vergrößerten Darstellung in einer ersten Variante und
- Fig. 3: die zweite Heizeinrichtung gemäß Fig. 2 in einer gegenüber der Fig. 2 abgewandelten Variante zur Verwendung einer Vorrichtung in Linearbauart, ebenfalls im Längsschnitt.

Gleiche Elemente bzw. Elemente mit gleicher Funktion sind in den Figuren mit den gleichen Bezugsziffern versehen.

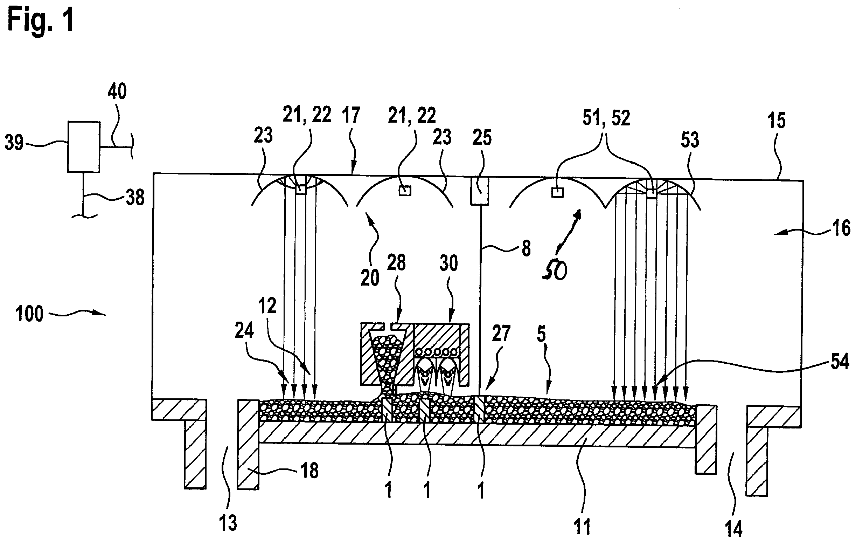

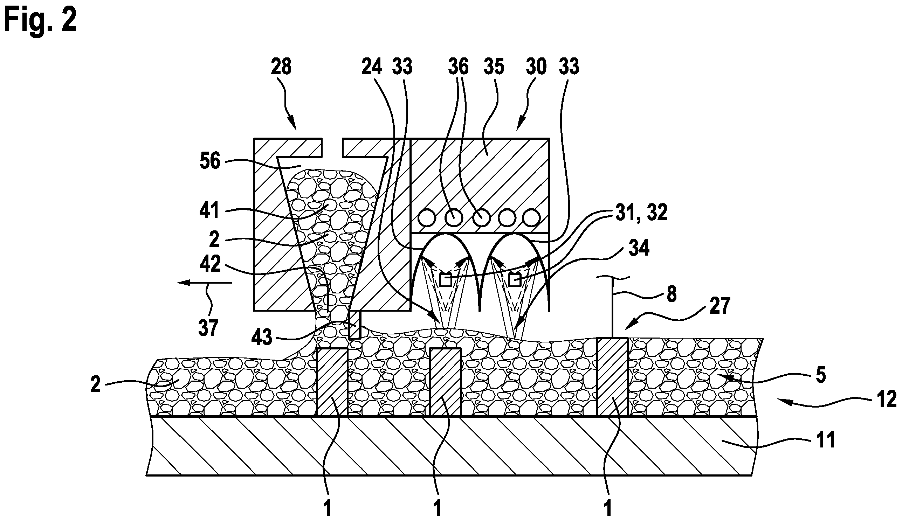

In den Fig. 1 und 2 ist eine erste Vorrichtung 100 zum generativen Herstellen von Bauteilen 1 stark vereinfacht dargestellt. Bei der Vorrichtung 100 handelt es sich um eine Vorrichtung 100, die in Rundläuferbauweise ausgebildet ist, d.h., dass ein Maschinengestell 11 der Vorrichtung 100 in einer nicht gezeigten Drehachse drehbar gelagert ist. Das Maschinengestell 11 weist einen topfartigen Aufnahmebereich 12 mit einer radial umlaufenden Wand 18 für ein pulverförmiges Material 2 auf, das innerhalb des Aufnahmebereichs 12 in Form eines Pulverbetts 5 angeordnet ist. Der Aufnahmebereich 12 weist beispielhaft einen radial umlaufenden Überlauf 13 auf, über den über den Aufnahmebereich 12 im Bereich der Wand 18 hinausragendes Material 2 abgeführt bzw. abgestreift werden kann.

Der Aufnahmebereich 12 bzw. das Maschinengestell 11 ist von einer haubenartigen Abdeckung 15 überdeckt, die eine Bearbeitungskammer 16 der Vorrichtung 100 begrenzt. Die Abdeckung 15 ermöglicht es insbesondere, dass die Bearbeitungskammer 16 auf besonders einfache Art und Weise mit einem Schutzgas befüllbar ist.

Innerhalb der Bearbeitungskammer 16 ist in einem Deckenbereich 17 der Bearbeitungskammer 16, d.h. in relativ großem Abstand zum Pulverbett 5, eine erste Heizeinrichtung 20 mit beispielhaft zwei ersten Heizelementen 21 angeordnet. Die beiden identisch ausgebildeten ersten Heizelemente 21 weisen jeweils eine Infrarotstrahlungsquelle 22 und einen im Querschnitt elliptisch geformten Spiegel 23 auf. Die Anordnung der Infrarotstrahlungsquelle 22 bzw. des Spiegels 23 ist derart, dass die von der Infrarotstrahlungsquelle 22 erzeugte Wärmestrahlung von dem Spiegel 23 in Richtung des Pulverbetts 5 reflektiert wird, um jeweils einen ersten Einwirkbereich 24 der Infrarotstrahlungsquelle 22 auf das Pulverbett 5 auszubilden. Insbesondere wird das Pulverbett 5 im Bereich der ersten Einwirkbereiche 24 der ersten Heizelemente 21 gleichmäßig auf eine erste Temperatur unterhalb der Schmelztemperatur des Materials 2 erwärmt.

Weiterhin ist im Deckenbereich 17 der Vorrichtung 100 eine Strahlungsquelle 25 zur Erzeugung eines energiereichen Strahls 8 (oder ein Durchgang für den Strahl 8) angeordnet, wobei der Strahl 8 in einem Auftreffbereich 27 auf das Pulverbett 5 auftrifft. Die Strahlungsquelle 25 ist insbesondere als Laserstrahlquelle ausgebildet, d.h., dass der Strahl 8 ein Laserstrahl ist. Im Auftreffbereich 27 wird das Material 2 des Pulverbetts 5 zur Ausbildung einer Schmelze über den Schmelzpunkt des Materials 2 erwärmt. Weiterhin ist der Strahl 8 relativ zur Oberfläche des Pulverbetts 5 verstellbar angeordnet, um durch Abscannen der Oberfläche des Pulverbetts 5 das Pulverbett 5 im Auftreffbereich 27 die jeweils oberste zu bildenden Schicht des Bauteils 1 aufzuschmelzen.

Ergänzend wird erwähnt, dass die Vorrichtung 100 lediglich rein beispielhaft und aus Gründen der Übersichtlichkeit mit (lediglich) einer einzigen Strahlungsquelle 25, einem Strahl 8 und einem Auftreffbereich 27 dargestellt wurde. Die Erfindung soll jedoch auch Vorrichtungen 10 mit mehr als einer Strahlungsquelle 25, mehr als einem Strahl 8 und mehr als einem Auftreffbereich 27 umfassen.

Zwischen der ersten Heizeinrichtung 20 und dem Pulverbett 5 ist nahe dem Pulverbett 5 eine Beschichtereinheit 28 angeordnet, die mit einer zweiten Heizeinrichtung 30 verbunden ist. Die zweite Heizeinrichtung 30 weist beispielhaft zwei zweite Heizelemente 31 auf, die ebenfalls in Form von Infrarotstrahlungsquellen 32 ausgebildet sind und jeweils mit einem Spiegel 33 zusammenwirken, der im Querschnitt parabolisch geformt ist. Die zweite Heizeinrichtung 30 dient zum weiteren Erwärmen des Pulverbetts 5 auf eine gegenüber der durch die erste Heizeinrichtung 20 erzielten höheren Temperatur, jedoch noch unterhalb der Schmelztemperatur des Materials 2. Durch die Spiegel 33 werden auf dem Pulverbett 5 zweite Einwirkbereiche 34 ausgebildet, die eine gleichmäßige Erwärmung des Pulverbetts 5 ermöglichen. Weiterhin ist anhand der Fig. 2 erkennbar, dass die beiden Spiegel 33 der zwei Heizelemente 31 auf der dem Pulverbett 5 abgewandten Seite mit einer Kühleinrichtung 35 zusammenwirken, die beispielhaft mehrere Kühlkanäle 36 aufweist, die mit einem Medium durchströmbar sind, um die Spiegel 33 zu kühlen.

Ergänzend wird erwähnt, dass eine derartige Kühleinrichtung 35 in analoger Weise auch bei den Heizelementen 21 der ersten Heizeinrichtung 20 optional vorgesehen sein kann.

Da die zweite Heizeinrichtung 30 sich zwischen der ersten Heizeinrichtung 20 und dem Pulverbett 5 befindet, ist es vorteilhaft, zur Verminderung der thermischen Belastung der zweiten Heizeinrichtung 30 stets nur die ersten Heizelemente 21 der ersten Heizeinrichtung 20 zu betreiben, die sich außer Deckung mit der zweiten Heizeinrichtung 20 bzw. der Beschichtereinheit 28 befinden. Hierzu kann es bei einer in Richtung des Pfeils 37 relativ zum Maschinengestell 11 bewegbaren Beschichtereinheit 28 bzw. zweiten Heizeinrichtung 30 vorgesehen sein, dass die Position der Beschichtereinheit 28 bzw. der zweiten Heizeinrichtung 30 über eine Leitung 38 einer Steuereinrichtung 39 übermittelt werden, die daraufhin über eine Leitung 40 lediglich die ersten Heizelemente 21 der ersten Heizeinrichtung 20 ansteuert, die sich außer Deckung mit der Beschichtereinheit 28 und der zweiten Heizeinrichtung 30 befinden.

Die in Bewegungsrichtung der zweiten Heizeinrichtung 30 der zweiten Heizeinrichtung 30 unmittelbar vorgeschaltete Beschichtereinheit 28 weist einen Produktspeicherbereich 41 für das Material 2 auf, das über einen Austrittsbereich 42 in Richtung des Pulverbetts 5 abgegeben werden kann. Im Austrittsbereich 42 ist darüber hinaus ein Rakelelement 43 vorgesehen, das bei einer Relativbewegung der Beschichtereinheit 28 zum Pulverbett 5 die Oberseite des Pulverbetts 5 einebnet bzw. zur Erzeugung einer konstanten, jeweils obersten Pulverschicht dient.

Weiterhin ist im Bereich der Vorrichtung 100 eine dritte Heizeinrichtung 50 mit beispielhaft zwei Heizelementen 51 im Deckenbereich 17 angeordnet. Die dritte Heizeinrichtung 50 bzw. dritten Heizelemente 51 sind in Analogie zur ersten Heizeinrichtung 20 bzw. den ersten Heizelementen 21 ausgebildet. Die als Infrarotstrahlungsquellen 52 ausgebildeten, jeweils mit einem Spiegel 53 zusammenwirkenden Heizelemente 51 dienen dazu, das Pulverbett 5 bzw. die Bauteile 1 in einem dritten Einwirkbereich 54 auf eine gegenüber der Temperatur im Bereich der ersten Heizeinrichtung 20 bzw. zweiten Heizeinrichtung 30 verringerte Temperatur zu temperieren.

Weiterhin ist es wie an sich bekannt vorgesehen, dass die Beschichtereinheit 28 und das Maschinengestell 11 bzw. der Aufnahmebereich 12 vertikal zueinander verstellbar angeordnet sind, derart, dass vor dem Aufbringen einer jeweils obersten Pulverschicht der Abstand zwischen der Beschichtereinheit 28 und dem Aufnahmebereich 12 um die Höhe der obersten Pulverschicht vergrößert wird (nicht dargestellt).

Die Funktionsweise der Vorrichtung 100 ist wie folgt: Mittels der Beschichtereinheit 28 wird jeweils eine oberste Pulverschicht auf das Pulverbett 5 abgegeben bzw. dosiert. Diese oberste Pulverschicht bzw. das Pulverbett 5 wird dabei durch die erste Heizeinrichtung 20 aufgewärmt. Anschließend gelangt die oberste Pulverschicht in den Bereich der zweiten Heizeinrichtung 30, wo die oberste Pulverschicht bzw. das Pulverbett 5 auf eine Temperatur aufgewärmt wird, die beispielsweise 95% der Schmelztemperatur des Materials 2 entspricht. Unmittelbar, nachdem die oberste Pulverschicht bzw. das Pulverbett 5 aus dem zweiten Einwirkbereich 34 der zweiten Heizeinrichtung 30 gelangt, gelangt das so vorgewärmte Material 2 in den Auftreffbereich des Strahls 8, der die oberste Pulverschicht bzw. das Pulverbett 5 selektiv aufschmelzt, um die Geometrie des Bauteils 1 im Bereich der obersten Pulverschicht auszubilden. Anschließend gelangt das Pulverbett 5 in die Einwirkbereiche 54 der dritten Heizeinrichtung 50, wo das Material 2 des Bauteils 1 zur Reduzierung von Wärmespannungen temperiert wird.

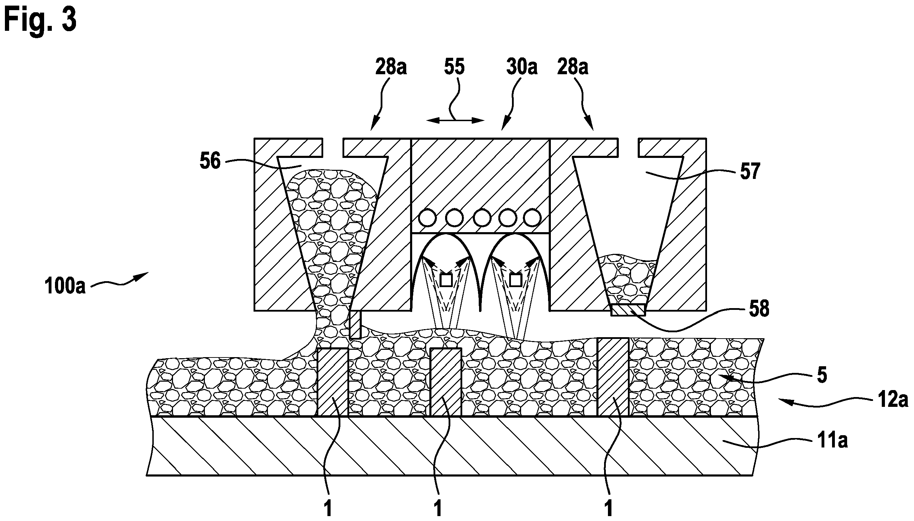

In der Fig. 3 ist eine gegenüber der Fig. 2 modifizierte Beschichtereinheit 28a bei einer Vorrichtung 100a dargestellt. Die Vorrichtung 100a unterscheidet sich von der Vorrichtung 100 dadurch, dass die Vorrichtung 100a in Linearbauweise ausgebildet ist, d.h., dass das Maschinengestell 11a bzw. der Aufnahmebereich 12a nicht um eine Drehachse bewegt wird, sondern relativ zur Beschichtereinheit 28a linear in Richtung des Doppelpfeils 55.

Um sowohl bei einer Bewegung in die eine Richtung, als auch bei einer Bewegung in die andere Richtung des Doppelpfeils 55 zur Erhöhung der Leistung jeweils eine oberste Pulverschicht auf das Pulverbett 5 aufbringen zu können, weist die Beschichtereinheit 28a zwei Produktspeicher 56, 57 auf, die beidseitig der zweiten Heizeinrichtung 30a (in Bezug auf die Bewegungsrichtung der Beschichtereinheit 28a) angeordnet sind. In der Fig. 3 ist der Fall dargestellt, bei der die Beschichtereinheit 28a in der Zeichenebene der Fig. 3 in Bezug zum Aufnahmebereich 12a von rechts nach links bewegt wird. Um zu vermeiden, dass dabei kein Material 2 aus dem Produktspeicher 57 auf das Pulverbett 5 gelangt, ist der Produktspeicher 57 mittels eines beweglichen Rakelelements 58 verschlossen.

Die soweit beschriebene Vorrichtung 100, 100a kann in vielfältiger Art und Weise abgewandelt bzw. modifiziert werden, ohne von der in den Ansprüchen offenbarten Erfindung abzuweichen.

## Patentansprüche

1. Vorrichtung (100; 100a) zur generativen Herstellung von Bauteilen (1), wobei das Bauteil (1) durch schichtweisen Aufbau und lagenweises Aufschmelzen von Pulvermaterial (2) der obersten Schicht eines Pulverbetts (5) mit einem energiereichen Strahl (8) und Erstarren von Pulverschmelze erzeugbar ist, wobei eine erste und eine zweite Heizeinrichtung (20, 30; 30a) mit jeweils wenigstens einem Heizelement (21, 31) vorgesehen ist, wobei die Heizelemente (21, 31) örtlich voneinander getrennte Einwirkbereiche (24, 34) auf das Pulverbett (5) aufweisen, wobei sich an den Einwirkbereich (34) des wenigstens einen zweiten Heizelements (31) der zweiten Heizeinrichtung (30) ein örtlich getrennter Auftreffbereich (27) des Strahls (8) auf das Pulverbett (5) anschließt, wobei das Pulverbett (5) und der Strahl (8) relativ zueinander beweglich angeordnet sind, wobei die zweite Heizeinrichtung (30; 30a) dazu ausgebildet ist, die Temperatur des Pulverbetts (5) lokal in dem Bereich zu erhöhen, der anschließend bei der Relativbewegung zwischen dem Pulverbett (5) und dem Strahl (8) in den Auftreffbereich (27) des Strahls (8) gelangt, und wobei die zweite Heizeinrichtung (30; 30a) dazu ausgebildet ist, das Pulverbett (5) auf eine gegenüber der durch die erste Heizeinrichtung (20) erzielte Temperatur erhöhte Temperatur zu erwärmen,
**dadurch gekennzeichnet,**
**dass** wenigstens ein Heizelement (21, 31, 51) der Heizeinrichtungen (20, 30; 30a, 50), vorzugsweise alle Heizelemente (21, 21, 51), eine Infrarotstrahlungsquelle aufweisen, dass die zweite Heizeinrichtung (30; 30a) zwischen dem Pulverbett (5) und wenigstens einem Heizelement (21) der ersten Heizeinrichtung (20) angeordnet ist, dass der zweiten Heizeinrichtung (30; 30a) unmittelbar eine mit der zweiten Heizeinrichtung (30; 30a) verbundene, beweglich angeordnete Beschichtereinheit (28; 28a) vorgeschaltet ist, und dass die Einwirkbereiche (24) der ersten Heizeinrichtung (20) insgesamt größer sind als die Einwirkbereiche (34) der zweiten Heizeinrichtung (30; 30a).

2. Vorrichtung nach Anspruch 1,
**dadurch gekennzeichnet,**
**dass** eine dritte Heizeinrichtung (50) mit wenigstens einem Heizelement (51) für das Pulverbett (5) im Bereich der erstarrten Pulverschmelze vorgesehen ist.

3. Vorrichtung nach Anspruch 1,
**dadurch gekennzeichnet,**
**dass** die Infrarotstrahlungsquelle jeweils mit einer Spiegeleinrichtung (23, 33, 53) zusammenwirkt, die die Wärmestrahlung in Richtung des Pulverbetts (5) reflektiert.

4. Vorrichtung nach Anspruch 3,
**dadurch gekennzeichnet,**
**dass** die Spiegeleinrichtungen (23, 33, 53) unterschiedlich stark gekrümmt und im Querschnitt elliptisch oder parabolisch ausgebildet sind.

5. Vorrichtung nach einem der Ansprüche 1 bis 4,
**dadurch gekennzeichnet,**
**dass** die Heizelemente (21, 31, 51) oberhalb des Pulverbetts (5) angeordnet sind.

6. Vorrichtung nach einem der Ansprüche 1 bis 5,
**dadurch gekennzeichnet,**
**dass** wenigstens ein im Überdeckungsbereich mit der zweiten Heizeinrichtung (30) angeordnetes Heizelement (21) der ersten Heizeinrichtung (20) abschaltbar ausgebildet ist.

7. Vorrichtung nach einem der Ansprüche 3 bis 6,
**dadurch gekennzeichnet,**
**dass** zumindest die Spiegeleinrichtung (33) der zweiten Heizeinrichtung (30; 30a) auf der dem Pulverbett (5) abgewandten Seite in Wirkverbindung mit einer Kühleinrichtung (35) angeordnet ist.

8. Vorrichtung nach einem der Ansprüche 1 bis 7,
**dadurch gekennzeichnet,**
**dass** die zweite Heizeinrichtung (30; 30a) dazu ausgebildet ist, die Temperatur des Pulvermaterials (2) auf 90% bis 98%, vorzugsweise 95% der Schmelztemperatur des Pulvermaterials (2) zu erhöhen.

## Claims

1. Device (100; 100a) for the generative production of components (1), wherein the component (1) can be generated by building up in layers and melting layer by layer powder material (2) of the uppermost layer of a powder bed (5) with a high energy beam (8) and solidifying powder melt, wherein a first and a second heating device (20, 30; 30a) is provided in each case with at least one heating element (21, 31), wherein the heating elements (21, 31) have locationally separate areas of effect (24, 34) on the powder bed (5), wherein the area of effect (34) of the at least one second heating element (31) of the second heating device (30) is adjoined by a locationally separate area of impingement (27) of the laser beam (8) on the powder bed (5), wherein the powder bed (5) and the beam (8) are arranged movably in relation to one another, wherein the second heating device (30; 30a) is designed to increase the temperature of the powder bed (5) locally in the area which subsequently comes into the area of impingement (27) of the beam (8) during the relative movement between the powder bed (5) and the beam (8), and wherein the second heating device (30; 30a) is designed to heat the powder bed (5) to a temperature that is increased in comparison with the temperature achieved by the first heating device (20),
**characterized**
**in that** at least one heating element (21, 31, 51) of the heating devices (20, 30; 30a, 50), preferably all of the heating elements (21, 21, 51), has an infrared radiation source, in that the second heating device (30; 30a) is arranged between the powder bed (5) and at least one heating element (21) of the first heating device (20), in that the second heating device (30; 30a) is directly preceded by a movably arranged coater unit (28; 28a), which is connected to the second heating device (30; 30a), and in that the areas of effect (24) of the first heating device (20) are altogether larger than the areas of effect (34) of the second heating device (30; 30a).

2. Device according to Claim 1,
**characterized**
**in that** a third heating device (50) with at least one heating element (51) for the powder bed (5) is provided in the area of the solidified powder melt.

3. Device according to Claim 1,
**characterized**
**in that** the infrared radiation source in each case interacts with a mirror device (23, 33, 53), which reflects the thermal radiation in the direction of the powder bed (5).

4. Device according to Claim 3,
**characterized**
**in that** the mirror devices (23, 33, 53) are curved to different extents and are designed elliptically or parabolically in cross section.

5. Device according to one of Claims 1 to 4,
**characterized**
**in that** the heating elements (21, 31, 51) are arranged above the powder bed (5).

6. Device according to one of Claims 1 to 5,
**characterized**
**in that** at least one heating element (21) of the first heating device (20) that is arranged in the overlapping area with the second heating device (30) is designed such that it can be switched off.

7. Device according to one of Claims 3 to 6,
**characterized**
**in that** at least the mirror device (33) of the second heating device (30; 30a) is arranged on the side facing away from the powder bed (5) in operative connection with a cooling device (35).

8. Device according to one of Claims 1 to 7,
**characterized**
**in that** the second heating device (30; 30a) is designed to increase the temperature of the powdered material (2) to 90% to 98%, preferably 95%, of the melting temperature of the powdered material (2).

## Revendications

1. Dispositif (100 ; 100a) pour la fabrication additive de composants (1), le composant (1) pouvant être généré par construction en couches et fusion par strates de matériau de poudre (2) de la couche supérieure d'un lit de poudre (5) avec un rayon riche en énergie (8) et solidification de masse fondue de poudre, un premier et un deuxième appareil de chauffage (20, 30 ; 30a) comprenant chacun au moins un élément de chauffage (21, 31) étant prévus, les éléments de chauffages (21, 31) comprenant des zones d'action (24, 34) séparées les unes des autres dans l'espace sur le lit de poudre (5), une zone d'incidence (27) séparée dans l'espace du rayon (8) sur le lit de poudre (5) étant alignée avec la zone d'action (34) dudit au moins un deuxième élément de chauffage (31) du deuxième appareil de chauffage (30), le lit de poudre (5) et le rayon (8) étant agencés de manière mobile l'un par rapport à l'autre, le deuxième appareil de chauffage (30 ; 30a) étant configuré pour augmenter localement la température du lit de poudre (5) dans la zone qui arrive ultérieurement lors du mouvement relatif entre le lit de poudre (5) et le rayon (8) dans la zone d'incidence (27) du rayon (8), et le deuxième appareil de chauffage (30 ; 30a) étant configuré pour porter le lit de poudre (5) à une température élevée par rapport à la température atteinte par le premier appareil de chauffage (20),
**caractérisé en ce que**
au moins un élément de chauffage (21, 31, 51) des appareils de chauffage (20, 30 ; 30a, 50), de préférence tous les éléments de chauffage (21, 21, 51), comprennent une source de rayonnement infrarouge, **en ce que** le deuxième appareil de chauffage (30 ; 30a) est agencé entre le lit de poudre (5) et au moins un élément de chauffage (21) du premier appareil de chauffage (20), **en ce qu'**une unité de revêtement (28 ; 28a) agencée de manière mobile, reliée avec le deuxième appareil de chauffage (30 ; 30a), est raccordée en amont directement avec le deuxième appareil de chauffage (30 ; 30a), et **en ce que** les zones d'action (24) du premier appareil de chauffage (20) sont au total plus grandes que les zones d'action (34) du deuxième appareil de chauffage (30 ; 30a).

2. Dispositif selon la revendication 1, **caractérisé en ce qu'**un troisième appareil de chauffage (50) comprenant au moins un élément de chauffage (51) est prévu pour le lit de poudre (5) dans la zone de la masse fondue en poudre solidifiée.

3. Dispositif selon la revendication 1, **caractérisé en ce que** la source de rayonnement infrarouge coopère à chaque fois avec un appareil à miroir (23, 33, 53), qui réfléchit le rayonnement de chaleur dans la direction du lit de poudre (5).

4. Dispositif selon la revendication 3, **caractérisé en ce que** les appareils à miroir (23, 33, 53) ont des courbures différentes et sont configurés sous forme elliptique ou parabolique dans la section transversale.

5. Dispositif selon l'une quelconque des revendications 1 à 4, **caractérisé en ce que** les éléments de chauffages (21, 31, 51) sont agencés au-dessus du lit de poudre (5).

6. Dispositif selon l'une quelconque des revendications 1 à 5, **caractérisé en ce qu'**au moins un élément de chauffage (21) du premier appareil de chauffage (20), agencé dans la zone de chevauchement avec le deuxième appareil de chauffage (30), est configuré sous forme désactivable.

7. Dispositif selon l'une quelconque des revendications 3 à 6, **caractérisé en ce qu'**au moins l'appareil à miroir (33) du deuxième appareil de chauffage (30 ; 30a) est agencé sur le côté détourné du lit de poudre (5) en liaison active avec un appareil de refroidissement (35).

8. Dispositif selon l'une quelconque des revendications 1 à 7, **caractérisé en ce que** le deuxième appareil de chauffage (30 ; 30a) est configuré pour augmenter la température du matériau de poudre (2) à 90 % à 98 %, de préférence 95 %, de la température de fusion du matériau de poudre (2).
